## Europäisches Patentamt

## European Patent Office

## Office européen des brevets

(11) Numéro de publication: **0 306 417**
**A1**

(12) **DEMANDE DE BREVET EUROPEEN**

(21) Numéro de dépôt: 88420287.0

(22) Date de dépôt: 23.08.88

(51) Int. Cl.⁴: **H 05 B 7/144**
H 05 B 7/02

(30) Priorité: 25.08.87 FR 8712173

(43) Date de publication de la demande:
08.03.89 Bulletin 89/10

(84) Etats contractants désignés: **DE ES IT SE**

(71) Demandeur: **PECHINEY ELECTROMETALLURGIE**
**Tour Manhattan La Défense 2-5, 6 place de l'Iris**
**F-92400 Courbevoie (FR)**

(72) Inventeur: **Couturier, Jean-Claude**
**486, rue François Peyron**
**D-38220 Vizille (FR)**

**Galvin, Paul-Henri**
**La Pallud-d'en-Bas Domancy**
**F-74700 Sallanches (FR)**

**Herve, Gérard**
**284, rue Paul Corbin Chedde**
**F-74190 le Fayet (FR)**

(74) Mandataire: **Pascaud, Claude et al**
**PECHINEY 28, rue de Bonnel**
**F-69433 Lyon Cédex 3 (FR)**

(54) Procédé et dispositif de mesure de la position des lignes de courant et des pointes d'électrodes dans un four électrique polyphasé, à arc submergé.

(57) L'invention concerne un procédé et un dispositif de mesure de la position des lignes de courant et des pointes d'électrodes dans un four électrique polyphasé à arc submergé.

Le procédé consiste en ce que :
- on mesure, pour chaque couple d'électrodes, au moyen d'un capteur, les valeurs de la composante horizontale $B_H$ et de la composante verticale $B_V$ du champ magnétique le long d'une axe vertical 6, parallèle à l'axe ZZ' du four 7, équidistant des deux électrodes ($E_1$ $E_2$) du couple considéré, et situé à proximité de la paroi externe du four.
- on détermine le maximum de la composante verticale $B_V$ et le minimum de la composante horizontale $B_H$ dont la coïncidence se produit sensiblement au niveau du plan horizontal contenant la ligne 3 qui joint les pointes des deux électrodes ($E_1$ $E_2$) du couple considéré.

FIG. 1

**Description**

## PROCEDE ET DISPOSITIF DE MESURE DE LA POSITION DES LIGNES DE COURANT ET DES POINTES D'ELECTRODES DANS UN FOUR ELECTRIQUE POLYPHASE, A ARC SUBMERGE

### DOMAINE TECHNIQUE DE L'INVENTION

L'invention concerne un procédé et un dispositif de mesure de la position des lignes de courant et des pointes d'électrodes dans un four électrique à arc submergé. Elle s'applique en particulier aux fours à arc polyphasés utilisés en électrométallurgie pour la production d'aciers, de ferro-alliages et de divers produits électrofondus métalliques ou oxydés.

### ETAT DE LA TECHNIQUE ANTERIEURE

Pour assurer une marche optimale d'un four à arc, l'exploitant souhaite connaître à tout moment la position de la pointe de chaque électrode par rapport à la sole du four ou, dans certains cas, par rapport à d'autres repères tels que le trou de coulée ou la surface du bain fondu de métal ou de laitier, ou le fond du creuset.

Ces renseignements sont importants dans le cas de la conduite de fours à arcs, particulièrement pour les fours de réduction carbothermique en courant triphasé à arc submergé.

Les moyens de mesure directe sont, à l'heure actuelle, restreints, faute de matériel suffisamment résistant aux températures élevées régnant dans le creuset. La longueur d'électrode est estimée en général en arrêtant le four et en relevant les électrodes, mais ceci est source de perturbations car on provoque un refroidissement du creuset et on risque de faire descendre de la charge sous les électrodes.

Les moyens indirects consistent en général à calculer la position de l'électrode en tenant compte du glissement de celle-ci, de la position des colliers et d'une consommation moyenne estimée. On peut aussi essayer d'établir des relations empiriques entre la position des électrodes et certains paramètres électriques, mais la précision du résultat obtenu est très insuffisante.

D'autres indices, plus qualitatifs, peuvent être déduits du comportement général du four et utilisés, mais leur exploitation systématique est délicate.

On sait en effet que les lignes de courant circulant dans le four induisent des champs magnétiques, et que la connaissance de leurs composantes permet de situer approximativement la zone réactionnelle. Mais la mesure de ces composantes a toujours été considérée comme inexploitable si l'on opère à l'extérieur de la cuve métallique du four.

Dans le brevet US 3 749 804, on décrit un procédé de mesure de la profondeur d'immersion des électrodes d'un four à arc consistant à mesurer, entre deux points pris sur la paroi métallique du four, la différence de potentiel électrique provoquée par les courants induits résultant de l'intensité circulant dans les électrodes du four.

Dans le brevet US 3 378 620, on capte un signal proportionnel à l'intensité du courant circulant dans les électrodes, au moyen d'une bobine directement appliquée sur la paroi et qui permet de suivre la descente progressive de la charge, constituée par des déchets d'acier en cours de refusion.

Mais les procédés ne permettent pas de localiser de façon précise et continue, la position exacte des électrodes, et la position fixe des points de mesure ou des capteurs n'assure pas, de toutes façons, une souplesse et une précision suffisantes des mesures.

### OBJET DE L'INVENTION

La demanderesse a constaté que contrairement à l'enseignement de l'art antérieur la mesure, à l'extérieur de l'enveloppe du four et sans contact avec celle-ci des composantes du champ magnétique induit par les lignes de passage du courant permettait de situer avec une précision convenable la position de la pointe des électrodes et du niveau réel du fond du creuset, et cela sans perturber le fonctionnement du four, et de façon continue.

Le principe de la méthode objet de l'invention est le suivant : les composantes horizontale et verticale du champ magnétique induit par les courants circulant entre les électrodes sont mesurées autour et à l'extérieur de la cuve métallique du four en fonctionnement. Une cartographie complète des champs peut être ainsi dressée, mais il y a une façon plus simple et plus efficace de procéder, qui fait l'objet de l'invention:

Un premier objet de l'invention est donc un procédé de mesure de la position des pointes d'électrodes et des lignes de courant circulant entre les pointes d'électrodes dans un four électrique polyphasé à arc submergé, caractérisé en ce que :
- on mesure, de façon sensiblement simultanée pour chaque couple d'électrodes, au moyen d'un capteur 8, les valeurs de la composante horizontale $B_H$ et de la composante verticale $B_V$ du champ magnétique le long d'une verticale 6, parallèle à l'axe ZZ' du four 7, face à deux électrodes ($E_1$ $E_2$) du couple considéré et situé à proximité et à l'extérieur de la paroi externe du four.
- on détermine le maximum de la composante verticale $B_V$ et le minimum de la composante horizontale $B_H$ dont la coïncidence se produit à peu près au niveau du plan sensiblement horizontal contenant la ligne 3 qui joint les pointes des deux électrodes ($E_1$ $E_2$) du couple considéré.
De préférence, le capteur est disposé à équidistance des deux électrodes ($E_1$,$E_2$) du couple considéré.

Un second objet de l'invention est un dispositif de mesure de la position des pointes d'électrodes et des lignes de courant (circulant entre les pointes d'électrodes) dans un four électrique polyphasé à arc submergé, caractérisé en ce qu'il comporte :
- un capteur constitué d'au moins une sonde détectrice de la composante horizontale $B_H$ du champ magnétique et d'au moins une sonde détectrice de la composante verticale $B_V$ du champ magnétique,

- un moyen pour mesurer $B_H$ et $B_V$ le long d'un mat vertical 12 parallèle à l'axe ZZ' du four, disposé de préférence à équidistance des deux électrodes $E_1$ $E_2$ d'un couple considéré, situé à proximité de la paroi externe du four, et sans contact avec cette paroi.

- un moyen de déterminer la position du minimum de $B_H$ et du maximum de $B_V$, en fonction de la position du capteur sur le mat 12.

## DESCRIPTION DES FIGURES

Les fig. 1 à 9 illustrent l'invention.

La figure 1 est un diagramme schématique des courants et des champs dans un four triphasé, alimenté en courant alternatif à 50 Hz.

Les figures 2 et 3 représentent respectivement, en théorie et en pratique, l'intensité relative des composantes horizontale et verticale du champ magnétique en fonction de la hauteur du point de mesure.

Les figures 4 et 5 représentent deux modes de mise en oeuvre du dispositif de mesure du champ.

La figure 6 représente les deux capteurs de champ horizontal et vertical.

La figure 7 est le schéma simplifié des circuits de mesure du champ.

Les figures 8 et 9 représentent deux modes de réalisation des capteurs de mesure du champ.

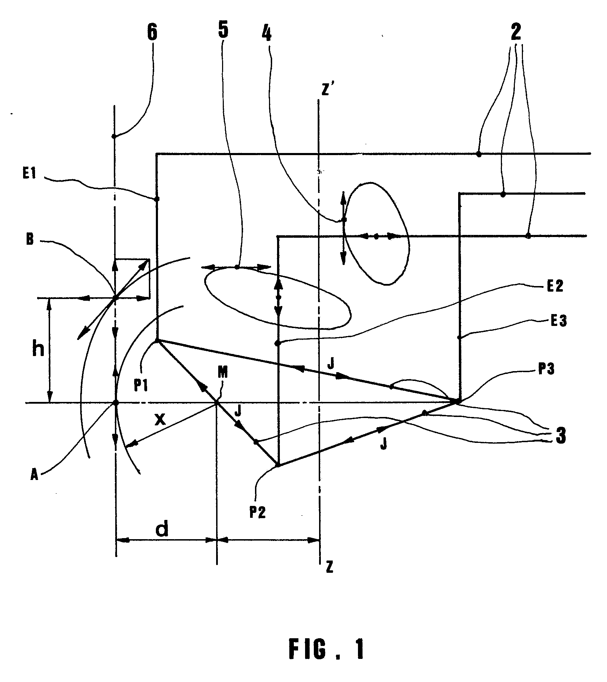

Sur la figure 1, on a représenté, de façon simplifiée, par de simples traits, les trois électrodes $E_1$, $E_2$, $E_3$ du four alimentées par des barres 2 elles-mêmes reliées aux secondaires d'un transformateur non représenté.

On a représenté par des traits 3 les lignes théoriques de courant circulant entre les points $P_1$, $P_2$, $P_3$ des électrodes $E_1$, $E_2$, $E_3$' le courant circulant dans chaque barre 2 induit un champ vertical 4, et le courant J circulant dans chaque électrode 1 induit un champ horizontal 5.

On considère un axe vertical 6 (parallèle à l'axe ZZ' du four) et situé à une distance d de l'axe du four. La ligne de champ constant sera constituée par un arc de cercle de rayon r, dont le centre M est le milieu de la ligne de courant 3 circulant, par exemple entre $P_1$ et $P_2$.

Si l'on déplace un capteur le long de l'axe 6, à partir d'une origine A, située dans le plan contenant les 3 pointes d'électrodes (plan supposé horizontal pour simplifier l'exposé), on observera des variations de part et d'autre d'une valeur maximale pour le champ vertical et d'une valeur minimale pour le champ horizontal.

En un point B donné, situé à une hauteur h au-dessus du plan de référence, on mesurera d'autres valeurs $B_H$ et $B_V$ des composantes horizontales et verticales du champ magnétique.

Ce qui vient d'être dit pour un four triphasé, en considérant les trois couples d'électrodes $E_1$ $E_2$, $E_2$ $E_3$ et $E_1$ $E_3$ s'applique de façon identique à un four diphasé comportant deux électrodes $E_1$ $E_2$.

Nous avons trouvé que l'on pouvait avoir des résultats aisément exploitables en procédant de la façon suivante :

- le long d'une verticale, équidistante de deux électrodes, proche de la paroi externe du four (5 à 100 cm), on mesure à intervalles de hauteur réguliers par exemple 2 à 10 cm les composantes du champ magnétique : horizontales, $B_H$, et verticales, $B_V$, situées dans le plan médian des deux électrodes. La mesure peut être répétée, dans le cas d'un four triphasé, pour chaque couple d'électrodes. La distance minimale entre le capteur et la paroi métallique externe du four est liée à contraintes pratiques (encombrement de l'espace, température etc) alors que la distance maximale est liée au niveau minimal du signal exploitable et à la dispersion des lignes de champ.

Si l'on ne considère que la ligne de courant horizontale joignant la pointe des deux électrodes envisagées, la composante du champ horizontale $B_H$ passant par l'axe du four, et celle de champ verticale $B_V$, peuvent, en première approximation, se mettre sous la forme :

$$B_H = \frac{h \times K}{(d^2 + h^2)^{3/2}}$$

$$B_V = \frac{d \times K}{(d^2 + h^2)^{3/2}}$$

h = hauteur, positive ou négative, prise par rapport à une origine correspondant à la position de la pointe des électrodes.

d = distance à laquelle est effectuée la mesure par rapport au plan défini par les deux électrodes considérées.

K = constante

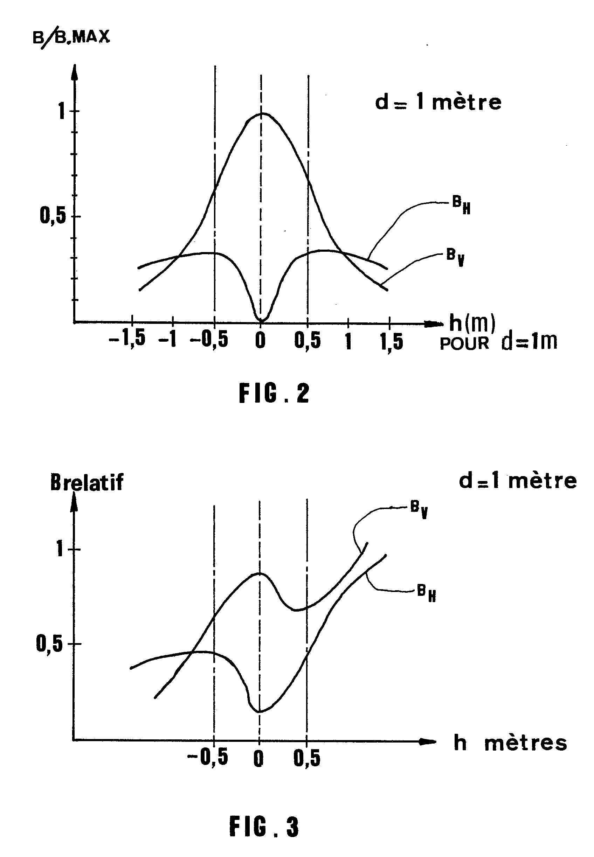

Lorsqu'on se déplace verticalement à distance d constante, (de l'axe du four), on obtient, en fonction de h, (hauteur), les courbes théoriques de la figure 2.

En pratique, compte tenu de l'influence des électrodes sur le champ horizontal et de celle des barres d'amenées de courant et des potences supportant ces barres, sur le champ vertical, les courbes tendent à être déformées selon le tracé de la figure 3.

Le point h = 0 (fig. 3), position des extrema de $B_H$ et $B_V$ correspond en première approximation à la position des pointes d'électrodes, ou, plus précisément, à la ligne de bouclage du courant au travers de la charge entre les électrodes (le mot "charge" désignant le mélange de produits mis en réaction dans le four, par exemple le minerai, le réducteur carboné et les additifs éventuels destinés à former le laitier).

Ces courbes sont établies à intensité constante dans les électrodes, toute variation d'intensité ayant des répercussions directes sur la valeur absolue du champ.

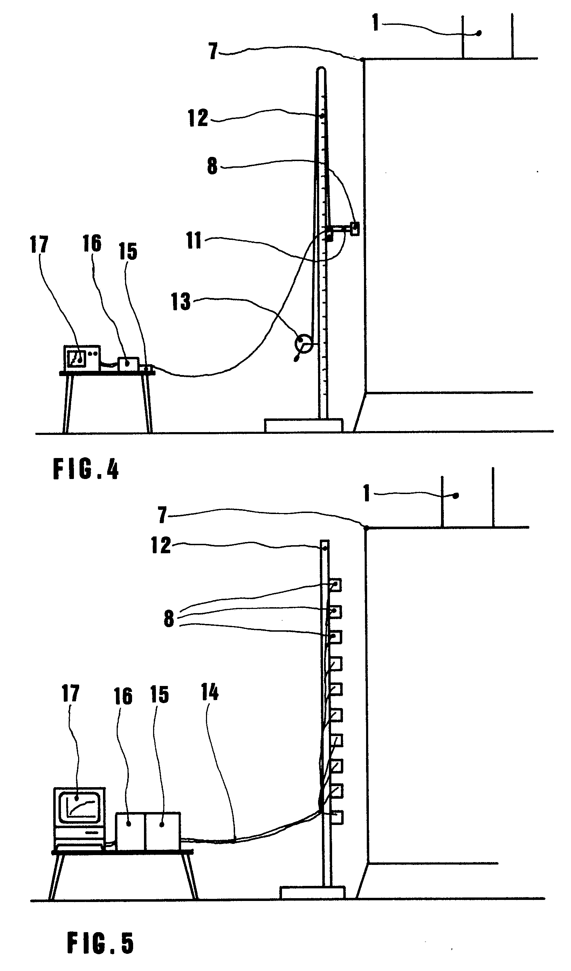

Les figures 4 et 5 montrent deux variantes d'un dispositif de mesure installé à proximité d'un four triphasé 7.

Selon un premier mode de réalisation, le capteur 8, comprenant une sonde 9 pour la composante horizontale $B_H$ et une sonde 10 pour la composante verticale $B_V$, est disposé sur un bras 11 mobile le long d'un mât vertical gradué 12, soit manuellement - treuil 13 - soit sous l'action d'un moteur (non représenté).

Chaque sonde 9, 10, est reliée par un faisceau de conducteurs blindés 14, dont le blindage est relié à la terre, à l'appareillage de mesure.

Le capteur 8 est, de préférence, protégé du rayonnement thermique du four par un écran 15 en aluminium poli.

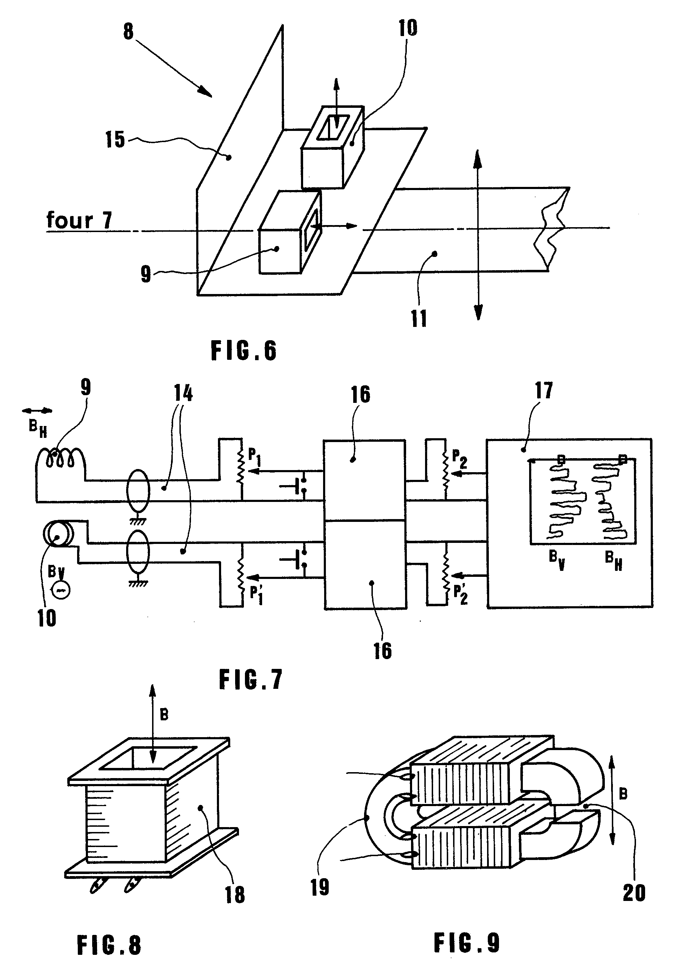

Dans un autre mode de réalisation (fig. 5), on dispose, le long du mât 12, une pluralité de capteurs fixes 8, dont la hauteur est repérée, reliés par un faisceau de conducteurs blindés 14 au dispositif de mesure 15, qui comporte un moyen permettant de relier chaque sonde au dispositif 16 de traitement des signaux et de donner une représentation graphique directe 17 des champs à étudier. Un exemple de raccordement électrique des capteurs est montrée sur la figure 7:

Les potentiomètres $P_1$, $P'_1$, $P_2$, $P'_2$ permettent d'ajuster le niveau des signaux captés à la sensibilité des appareils de mesure, d'enregistrement, de calcul et de visualisation 17, de façon à éviter toute saturation de l'appareillage tout en conservant le sensibilité maximale.

Les figures 8 et 9 montrent deux modes de réalisation des sondes 9, sous forme d'une bobine ouverte 18, ou d'une double bobine 19 sur circuit magnétique en C muni d'un entrefer ouvert 20.

Il est également possible d'utiliser des capteurs à effet HALL, avec des circuits de compensation de température, bien connus de l'homme de l'art.

Dans les différents cas, l'origine de la mesure de hauteur des capteurs peut être choisie arbitrairement, par exemple : niveau du sol, ou niveau du fond du creuset du four.

## EXEMPLE DE MISE EN OEUVRE

L'invention a été mise en oeuvre sur un four triphasé de 10 MW produisant du silicium par carbothermie.

Les capteurs ont été disposés à une distance de la paroi externe du four d = 25 centimètres.

Les champs mesurés varient entre 0 et $5.10^{-3}$ Tesla (0 et 50 gauss).

En utilisant par exemple comme capteur deux bobines selon la fig.8, les signaux captés varient entre 0 et 1 volt alternatif. Les convertisseurs 16 donnent en sortie un courant de 0 à 20 milliampères continus pour un signal d'entrée de 0 à 1 volt alternatif. Les courbes obtenues sur l'enregistreur sont en général celles de la figure 3; des particularités de fonctionnement de certains fours peuvent en affecter la forme et faire, par exemple, paraître des extrema secondaires permettant de localiser des lignes de passage préférentiel du courant entre les électrodes.

On constate que le maximum de $B_V$ se trouve pratiquement sur le même axe que le minimum de $B_H$, ce qui permet de localiser avec une bonne précision la position des pointes $P_1$ $P_2$ des électrodes $E_1$ $E_2$, ou plus précisément, de la ligne de courant 3 entre les pointes $P_1$ et $P_2$. On vérifie, de la même façon, que la point $P_3$ de l'électrode $E_3$ se trouve sensiblement au même niveau.

## AVANTAGES PROCURES PAR L'INVENTION

De nombreux essais ont été effectués sur des fours de réduction carbothermique de différentes puissances, de 100 à 20 000 kW.

Il a été possible de déterminer des passages de courant anormaux correspondant à un disfonctionnement de four.

La zone réactionnelle a pu être mise en évidence ainsi que les positions probables des pointes d'électrodes et de la sole de four.

De plus, l'évolution dans le temps des profils de $B_H$ et de $B_V$ en fonction de la hauteur permet de détecter des dérives de fonctionnement et de comparer des fours entre eux. Les mesures ne sont pas perturbatrices du fonctionnement du four et il serait dommage de ne pas interpréter l'information magnétique dispensée gratuitement par le four et aisément récupérable.

L'usage continu et systématique de ce procédé permet d'accroître les possibilités d'exploitation et de couplage au dispositif de régulation du four.

De façon générale, l'invention permet d'établir des corrélations entre les mesures de champ et le fonctionnement du four, donc de mieux comprendre les mécanismes réactionnels, de prévoir et de corriger rapidement les anomalies de fonctionnement, et d'affiner la régulation.

### Revendications

1. Procédé de mesure de la position des lignes de courant et des pointes d'électrodes dans un four électrique polyphasé à arc submergé, caractérisé en ce que :
- on mesure de façon sensiblement simultanée, pour chaque couple d'électrodes, au moyen d'un capteur, les valeurs de la composante horizontale $B_H$ et de la composante verticale $B_V$ du champ magnétique le long d'une verticale 6, face à deux électrodes ($E_1$ $E_2$) du couple considéré et situé à proximité de la paroi externe du four, sans contact avec celle-ci..
- on détermine le maximum de la composante verticale $B_V$ et le minimum de la composante horizontale $B_H$ dont la coïncidence se produit au niveau du plan sensiblement horizontal contenant la ligne 3 qui joint les pointes des deux électrodes ($E_1$ $E_2$) du couple considéré.

2. Procédé selon la revendication 1, caractérisé en ce que la verticale de mesure 6 est équidistante des deux électrodes du couple considéré.

3. Dispositif de mesure de la position des lignes de courant et des pointes d'électrodes) dans un four électrique polyphasé à arc submergé, caractérisé en ce qu'il comporte :

- un capteur 8 constitué d'au moins une sonde détectrice 9 de la composante horizontale $B_H$ du champ magnétique et au moins une sonde détectrice 10 de la composante verticale $B_V$ du champ magnétique.

- un moyen pour mesurer $B_H$ et $B_V$ le long d'un mât vertical 12 parallèle à l'axe ZZ' du four, face à deux électrodes ($E_1$ $E_2$) d'un couple considéré, situé à proximité de la paroi externe du four, et sans contact avec celle-ci.

- un moyen de déterminer la position du minimum de $B_H$ et du maximum de $B_V$, en fonction de la position du capteur sur le mat 12.

4. Dispositif, selon revendication 3, caractérisé en ce que le mât vertical 12 est disposé à proximité et à l'extérieur de la paroi externe du four, à équidistance des deux électrodes ($E_1$ $E_2$) d'un couple considéré.

5. Dispositif, selon revendication 4, caractérisé en ce que le mât vertical 12 est situé à une distance comprise entre 5 et 100 centimètres de la paroi externe du four.

6. Dispositif, selon revendication 3, caractérisé en ce que le capteur 8 est mobile le long du mât vertical 12.

7. Dispositif, selon revendication 3, caractérisé en ce que le capteur 8 est constitué par une pluralité de capteurs élémentaires fixes disposés le long du mât vertical 12, et reliés à un dispositif de traitement des signaux captés.

8. Dispositif, selon revendication 6 ou 7, caractérisé en ce que chaque capteur 8 comporte une bobine détectrice 9 de la composante horizontale $B_H$ et une bobine détectrice 10 de la composante verticale $B_V$.

9. Dispositif, selon revendication 6 ou 7, caractérisé en ce que chaque capteur 8 comporte un premier détecteur à effet HALL pour la composante horizontale $B_H$, et un second détecteur à effet HALL pour la composante verticale $B_V$.

FIG . 1

B/B.MAX

d = 1 mètre

1

0,5

$B_H$

$B_V$

−1,5 −1 −0,5 0 0,5 1 1,5 → h(m)
POUR d=1m

**FIG . 2**

Brelatif

d =1 mètre

$B_V$

1

$B_H$

0,5

−0,5 0 0,5 → h mètres

**FIG . 3**

FIG.4

FIG.5

**FIG.6**

four 7

**FIG.7**

$B_H$

$B_V$

$P_1$

$P_1'$

$P_2$

$P_2'$

$B_V$  $B_H$

**FIG.8**

B

**FIG.9**

B

Office européen
des brevets

**RAPPORT DE RECHERCHE EUROPEENNE**

Numero de la demande

EP 88 42 0287

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 103 216 (SIEMENS)<br>* Page 1, alinéa 2; page 2, dernier alinéa; page 3, alinéa 1; figures 3,4 *<br>& US-A-3 749 804 (Cat. D,A)<br>--- | 1,3,6-8 | H 05 B 7/144<br>H 05 B 7/02 |
| D,A | US-A-3 378 620 (SCHWABE et al.)<br>* Colonne 2, alinéa 2; colonne 4, lignes 33-46; figures 8,9 *<br>--- | 1,3,7,8 | |
| A | FR-A-1 435 794 (BELL)<br>* Page 3, colonne de gauche, alinéa 2 *<br>--- | 1,2,8 | |
| A | GB-A-1 056 768 (LONDON ELECTRICITY BOARD)<br>--- | | |
| A | US-A-3 636 228 (COMENETZ)<br>----- | | |

DOMAINES TECHNIQUES RECHERCHES (Int. Cl.4)

H 05 B 7/00
G 01 V 3/00
G 01 B 7/00

Le présent rapport a été établi pour toutes les revendications

| Lieu de la recherche | Date d'achèvement de la recherche | Examinateur |
|---|---|---|
| LA HAYE | 10-11-1988 | RAUSCH R.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

            
& : membre de la même famille, document correspondant